# DEMANDE DE BREVET EUROPEEN

(11) **EP 1 622 041 A1**
(43) Date de publication de la demande: **01.02.2006**
(21) Numéro de dépôt: 04291960.5
(22) Date de dépôt: 30.07.2004
(51) Int. Cl.: G06F 17/30

(54) **Procédé et système distribués de filtrage personnalisé de réponses de moteurs de recherche**

(71) Demandeur: FRANCE TELECOM, 75015 Paris (FR)
(72) Inventeur: Plu, Michel, 22300 Lannion (FR)
(74) Mandataire: Cabinet Martinet & Lapoux

(57) **Abrégé**

Pour filtrer de manière personnalisée des réponses à une requête courante de recherche d'informations (Req) transmise depuis un terminal (4a) à un moteur de recherche (1m), des requêtes proches de la requête courante sont recherchées dans une base personnelle d'informations (5a) associée au terminal et dans le moteur de recherche. Pour chacune des réponses associées à la requête courante trouvées par le moteur de recherche est déterminé un score dépendant du nombre d'associations de la réponse à des requêtes proches trouvées dans la base pour sélectionner des réponses ayant des scores nuls et positifs. Les réponses sélectionnées en association à la requête courante sont enregistrées dans la base. La requête courante et les réponses sélectionnées sont distribuées par le terminal à des messageries (21-2S) d'utilisateurs autorisés pour leur faciliter des échanges de sélections de réponses.

## Description

La présente invention concerne des systèmes informatiques pour la recherche d'informations à travers l'internet. Plus particulièrement elle a trait à un procédé et un terminal de filtrage personnalisé de réponses de moteurs de recherche.

Trois moyens de recherche d'informations sont connus selon la **technique antérieure**.

Le premier moyen de recherche d'informations est un moteur qui collecte périodiquement des contenus informationnels accessibles pour construire une base d'index de ces contenus. Des terminaux d'utilisateurs interrogent cette base pour retrouver des contenus correspondant à leurs requêtes. Les réponses du moteur sont triées selon différents algorithmes.

Ce moteur de recherche a pour inconvénient que chaque terminal d'utilisateur reçoit les mêmes réponses dans le même ordre quels que soient l'usage, le profil, les intérêts et les préférences de l'utilisateur. Or les requêtes à un moteur de recherche sont souvent peu précises et ambiguës.

Le deuxième moyen de recherche d'informations est un moteur de recherche qui enregistre des sélections de réponses dans une base centralisée gérée par le moteur de recherche. Ces sélections sont réutilisées par le moteur pour trier les réponses de manière personnalisée. Les sélections utilisées pour trier les réponses dans un terminal d'utilisateur sont les sélections de l'utilisateur pour la même requête ou pour une requête proche, ou les sélections par d'autres utilisateurs ayant une relation avec l'utilisateur.

Le deuxième moteur de recherche personnalise ainsi la liste de réponses à construire à partir de sélections déjà faites par l'utilisateur ou d'autres utilisateurs en relation avec lui. Le deuxième moteur de recherche comporte principalement les inconvénients suivants :
- l'utilisateur doit être authentifié par le moteur pour lire sa liste de réponses personnalisée ;
- les sélections de réponses faites par l'utilisateur sont conservées par le moteur de recherche ; à cet inconvénient, les utilisateurs peuvent réagir en refusant d'utiliser ce moteur à cause de l'enregistrement par un service tiers d'informations personnelles qui risquent d'être utilisées à des fins commerciales ou d'autres fins non désirées.

Le troisième moyen de recherche d'informations comporte des terminaux d'utilisateurs incluant des logiciels clients communiquant entre eux à travers un réseau de télécommunications. Chaque terminal d'utilisateur exécute un logiciel client pour gérer et rechercher des informations. Lorsqu'un utilisateur recherche une information, son logiciel client recherche cette information dans la base personnelle d'informations du terminal de l'utilisateur et transmet la requête à d'autres logiciels clients de terminaux d'utilisateurs connectés au réseau. Ces logiciels clients recherchent cette information dans les bases d'informations personnelles des terminaux d'utilisateurs et retransmettent la requête à d'autres logiciels clients. Chaque logiciel client ayant reçu la requête fournit des réponses soit directement au logiciel client de l'utilisateur, soit au logiciel client lui ayant envoyé la requête.

Le logiciel client conserve également des informations personnelles, mais la construction de la liste de réponses n'est terminée qu'après la réception de toutes les réponses des logiciels clients interrogés par la requête transmise à ceux-ci en cascade. La liste des réponses pour l'utilisateur est construite au fur et à mesure de la réception des réponses des logiciels clients interrogés, et par suite l'ordre des réponses affichées change ce qui perturbe l'utilisateur lisant les réponses. D'autre part, seules les informations gérées par les terminaux d'utilisateurs qui sont connectés au moment de la requête sont considérées comme des réponses potentielles. Peu de logiciels clients gèrent autant d'informations qu'un moteur de recherche centralisé. Même en combinant l'ensemble des bases d'informations personnelles, le troisième moyen de recherche d'informations présente un risque de nombreuses redondances et la totalité des réponses reste trop souvent non représentative de l'ensemble des contenus pouvant être accessibles.

La présente invention a pour objectif de sélectionner des réponses à au moins un moteur de recherche centralisé dans un terminal d'utilisateur en y conservant toutes les informations personnelles relatives à une requête de recherche d'informations et aux réponses à celle-ci.

Pour atteindre cet objectif, un procédé pour filtrer des réponses à une requête courante de recherche d'informations transmise depuis un terminal à au moins un moteur de recherche, est caractérisé en ce qu'il comprend les étapes suivantes :
rechercher des requêtes proches de la requête courante dans une base personnelle d'informations associée au terminal et dans le moteur de recherche,
déterminer pour chacune des réponses associées à la requête courante trouvées par le moteur de recherche et transmises au terminal un score dépendant du nombre de fois que la réponse est associée à des requêtes proches trouvées dans la base afin de sélectionner des réponses qui ont des scores nuls et positifs, et
enregistrer les réponses sélectionnées en association à la requête courante dans la base.

Les requêtes proches de la requête courante dans la base peuvent être aussi des requêtes qui sont extraites de la base et proches de requêtes qui sont proches de la requête courante et fournies par le moteur de recherche.

L'invention facilite également des échanges de sélections de réponses entre des utilisateurs en distribuant les sélections de réponses dans des bases d'informations gérées respectivement par les terminaux des utilisateurs, mais sous réserve d'autorisations sélectives de ces derniers et sans recourir aux moteurs de recherche sollicités pour recueillir des réponses à des requêtes. Dans ce cadre, le procédé de l'invention peut comprendre une identification de messageries autorisées à recevoir les réponses sélectionnées, et une transmission d'un message incluant un intitulé de la requête courante et les réponses sélectionnées en association à la requête courante par le terminal aux messageries autorisées, d'une part, et une lecture de messages déposés par d'autres terminaux dans une messagerie depuis le terminal, chaque message déposé incluant des réponses sélectionnées en association à un identificateur d'une requête, et un enregistrement dans la base de la requête et des réponses sélectionnées extraites de chaque message déposé lu en fonction notamment de comparaisons de l'identificateur de la requête avec des identificateurs des requêtes incluses dans la base, d'autre part.

Afin d'inciter d'autres utilisateurs à recevoir des sélections de réponses associées à des requêtes établies depuis le terminal d'un utilisateur, le procédé de l'invention peut comprendre une transmission de messages contenant chacun une étiquette de l'utilisateur créée à partir d'une requête, des réponses sélectionnées depuis le terminal de l'utilisateur et au moins une étiquette d'au moins un autre utilisateur qui est associée à au moins l'une de ces réponses par cet autre utilisateur et qui a été extraite d'un message de la messagerie de l'utilisateur, une mise à jour de relations entre chaque étiquette d'un utilisateur extraite desdits messages et chaque étiquette d'autres utilisateurs aussi extraites desdits messages, et une transmission de recommandations par le moteur de mise en relation aux terminaux desdits autres utilisateurs pour ajouter l'identificateur d'une messagerie associée audit terminal dans une liste de diffusion des étiquettes desdits terminaux.

L'invention concerne également un terminal pour filtrer des réponses à une requête courante de recherche d'informations transmise à au moins un moteur de recherche, comprenant des moyens mettant en oeuvre les étapes du procédé de l'invention, ainsi qu'un système de recherche d'informations comprenant des moteurs de recherche, des terminaux pour filtrer des réponses à des requêtes de recherche d'informations transmises aux moteurs de recherche, et des messageries dans des serveurs de messagerie respectivement associées aux terminaux, dans lequel chaque terminal est un terminal de l'invention comprenant :
un moyen pour rechercher des requêtes proches d'une requête courante transmise par le terminal, dans une base personnelle d'informations associée au terminal et dans au moins un moteur de recherche,
un moyen pour déterminer pour chacune des réponses associées à la requête courante trouvées par le moteur de recherche et transmises au terminal un score dépendant du nombre de fois que la réponse est associée à des requêtes proches trouvées dans la base afin de sélectionner des réponses qui ont des scores nuls et positifs,
un moyen pour enregistrer les réponses sélectionnées en association à la requête courante dans la base, et
un moyen pour transmettre un message incluant un intitulé de la requête courante et les réponses sélectionnées en association à la requête courante par le terminal à des messageries autorisées à recevoir les réponses sélectionnées,
un moyen pour lire des messages déposés par d'autres terminaux dans la messagerie associée au terminal, chaque message déposé incluant des réponses sélectionnées en association à l'intitulé d'une requête et transmis par lesdits autres terminaux, et
un moyen pour enregistrer dans la base la requête et des réponses sélectionnées extraites de chaque message déposé lu en fonction notamment de comparaisons d'un identificateur de la requête avec des identificateurs des requêtes incluses dans la base.

D'autres caractéristiques et avantages de la présente invention apparaîtront plus clairement à la lecture de la description suivante de plusieurs réalisations préférées de l'invention, données à titre d'exemples non limitatifs, en référence aux **dessins annexés** correspondants dans lesquels :
- la figure 1 est un bloc-diagramme schématique d'un système de recherche d'informations selon l'invention ; et
- la figure 2 est un bloc-diagramme schématique d'un module de traitement de requêtes et de sélection de réponses inclus dans un terminal d'utilisateur pour la mise en oeuvre du procédé de filtrage de réponses à une requête de recherche d'informations selon l'invention ;
- la figure 3 est un algorithme du procédé de filtrage de réponses à la suite du traitement d'une requête de recherche d'informations d'un utilisateur, selon l'invention ; et
- la figure 4 est un algorithme d'étapes de lecture et d'analyse de message de sélection de réponses pour une mise à jour d'une base personnelle d'informations associée au terminal d'utilisateur.

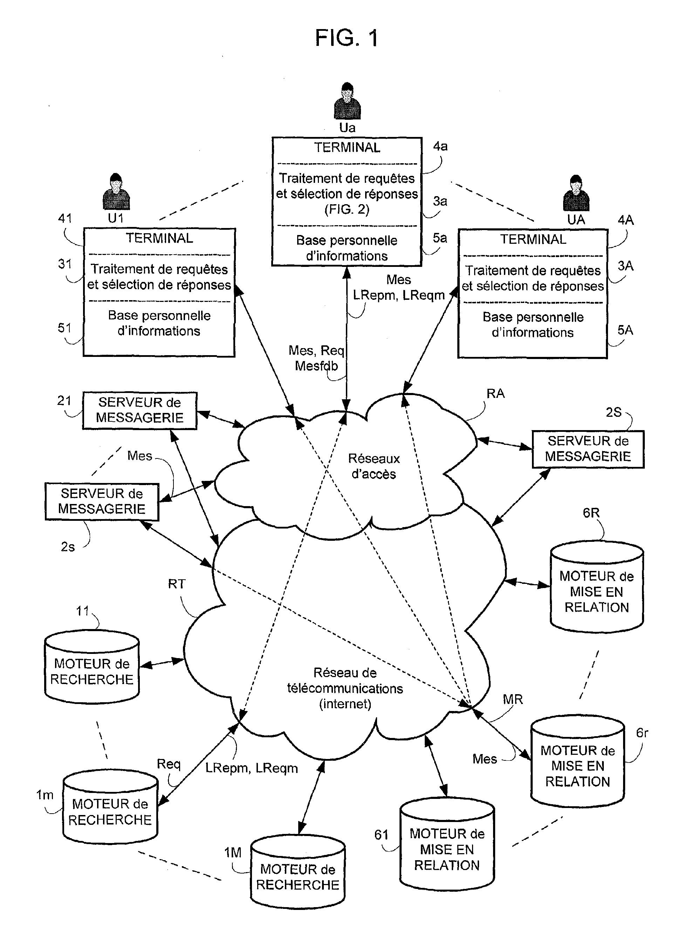

En référence à la figure 1, un **système de recherche d'informations** mettant en oeuvre le procédé de filtrage de réponses à une requête de recherche d'informations selon l'invention comprend un ou plusieurs moteurs de recherche centralisés 11,... 1m,...1M, avec 1 ≤ m ≤ M, des serveurs de messagerie 21, ... 2s,... 2S, avec 1 ≤ s ≤ S, des modules de traitement de requêtes et de sélection de réponses 31,... 3a,... 3A installés respectivement dans des terminaux d'utilisateur 41,... 4a,... 4A associés à des bases d'informations personnelles locales 51,... 5a,... 5A, avec 1 ≤ a ≤ A, et un ou plusieurs moteurs de mise en relation 61,... 6r,... 6R, avec 1 ≤ r ≤ R. En pratique, l'entier A est supérieur aux entiers M, S et R. Les moteurs de recherche, les serveurs de messagerie et les moteurs de mise en relation communiquent les uns avec les autres notamment à travers un réseau de télécommunications à débit élevé RT, tel que l'internet. Les terminaux d'utilisateur et les serveurs de messagerie communiquent à travers des réseaux d'accès respectifs RA et éventuellement à travers l'internet RT.

Un moteur de recherche 1m reçoit des requêtes de recherche d'informations Req des modules de traitement de requêtes et de sélection de réponses dans les terminaux d'utilisateur et leur retourne des liste de réponses LRepm et des listes de requêtes proches LReqm via l'internet RT.

Un serveur de messagerie 2s comprend plusieurs messageries respectivement associées à plusieurs modules de traitement de requêtes et de sélection de réponses dans des terminaux d'utilisateur et reçoit et enregistre des messages de requête - réponse Mes le plus souvent textuels et les code et retransmet respectivement à destination des modules associés 3a-3A qu'il gère. Le serveur de messagerie 2s communique à travers un réseau d'accès respectif RA avec chaque module de traitement de requêtes et de sélection de réponses associé qui lui demande les messages qui lui sont destinés et qu'il n'a pas encore décodés, lus et analysés.

Un terminal 4a est par exemple un terminal de radiocommunications mobile, et le réseau d'accès respectif RA comprend le réseau fixe d'un réseau de radiocommunications cellulaire, par exemple de type GSM (Global System for Mobile communications) avec un service GPRS (General Packet Radio Service), ou de type UMTS (Universal Mobile Telecommunications System). Selon un autre exemple, le terminal 4a est un ordinateur personnel relié directement par modem à une ligne xDSL (Digital Subscriber Line) ou RNIS (Réseau Numérique à Intégration de Services) reliée au réseau d'accès RA correspondant. Selon un autre exemple, le terminal 4a est un terminal fixe de télécommunications et le réseau d'accès respectif RA comprend un réseau téléphonique commuté. Selon d'autres exemples, le terminal 4a comprend un dispositif ou objet électronique de télécommunications personnel à l'utilisateur qui peut être un assistant numérique personnel communiquant PDA. Le terminal peut être également tout autre terminal domestique portable ou non tel qu'une console de jeux vidéo, ou un récepteur de télévision intelligent coopérant avec une télécommande à afficheur ou un clavier alphanumérique servant également de souris à travers une liaison infrarouge. Les terminaux d'utilisateur et les réseaux d'accès ne sont pas limités aux exemples ci-dessus et peuvent être constitués par d'autres terminaux et réseaux d'accès connus.

Dans la suite, on se réfèrera par exemple au module de traitement de requêtes et de sélection de réponses 3a chargé et installé dans le terminal 4a de l'utilisateur Ua associé à, c'est - à - dire relié à ou incorporant la base personnelle d'informations 5a possédant toutes les fonctionnalités d'une base de pour être utilisé dans l'exécution du procédé selon l'invention.

Le logiciel client 3a présente les fonctionnalités suivantes pour l'utilisateur Ua :
- formuler des requêtes de recherche d'informations Req ;
- sélectionner des réponses de manière positive et donc intéressantes pour l'utilisateur Ua afin de les retrouver de manière préférentielle lors de prochaines requêtes identiques ou proches, ou au contraire de manière négative et donc dénuées d'intérêt pour l'utilisateur afin de les ignorer lors de prochaines requêtes identiques ou proches ;
- associer une ou plusieurs étiquettes Etiq à chaque requête Req pour laquelle des réponses ont été sélectionnées ; un ensemble de réponses sélectionnées pour une requête constitue une sélection de réponses associée à la requête, et chaque réponse sélectionnée est associée à une étiquette qui est créée automatiquement à partir de la requête par le logiciel client ;
- créer, gérer et organiser hiérarchiquement les étiquettes; lors de la création d'une étiquette Etiq, l'utilisateur Ua peut préciser un unique ancêtre direct et un intitulé de l'étiquette ; l'ancêtre direct est lui-même une étiquette qui contient une ou plusieurs étiquettes filles associées à des requêtes ; un ancêtre racine par défaut est affecté à chaque étiquette et indiqué dans celle-ci ; un intitulé par défaut est donné à une nouvelle étiquette ; l'intitulé par défaut de cette nouvelle étiquette est composé automatiquement de l'intitulé de la requête de recherche courante Req suivi d'un chiffre si cet intitulé existe déjà ; lors de la création d'une étiquette Etiq, le logiciel client 3a lui affecte un données connue, et en relation avec le serveur de messagerie 2s et le moteur de mise en relation 6r.
   Le **module de traitement de requêtes et de sélection de réponses** 3a est, selon une réalisation préférée, un programme d'ordinateur appelé logiciel client chargé et exécuté dans le terminal 4a.
   En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.
   Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.
   D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.
   Alternativement, le support d'informations peut être un circuit intégré dans lequel le programme est incorporé, le circuit étant adapté pour exécuter ou identificateur unique pour le système global, composé d'un numéro d'étiquette NumEtiq et de l'identificateur Uid de l'utilisateur Ua ; le numéro d'étiquette NumEtiq est initialisé à 0 lors de la première exécution du logiciel client 3a et incrémenté de 1 lors de chaque nouvelle création d'étiquette ; l'utilisateur peut aussi préciser dans l'étiquette une propriété appelée "devoir de transmission" qui indique si l'étiquette doit être transmise ou pas à d'autres utilisateurs ; cette propriété a trois valeurs possibles : "tous", "nulle", ou une liste Luid1 des identificateurs d'utilisateurs et donc des terminaux des utilisateurs qui doivent être informés qu'une sélection de réponses qu'ils reçoivent provient de cette étiquette ; l'identificateur d'un utilisateur dans la liste LUid1 inclut par exemple l'adresse de la messagerie de l'utilisateur incluse dans l'un des serveurs 21 à 2S ;
- associer à chaque étiquette Etiq une deuxième liste d'utilisateurs LUid2 appelée "liste de diffusion" de l'étiquette, établie par l'utilisateur Ua ; chaque utilisateur autorisé de cette liste est identifié par un identificateur unique, noté Uid (User identifier) ;
- associer une troisième liste d'utilisateurs LUid3 appelée "besoin de retour", comprenant les identificateurs des utilisateurs ayant besoin d'être informés de l'usage fait de certaines sélections de réponse envoyées par le terminal de l'utilisateur ;
- les identificateurs dans les listes LUid1 et LUid2 sont connus par l'utilisateur, peuvent être saisis directement dans le terminal de l'utilisateur, ou recueillis via des systèmes de communications reliant les terminaux des utilisateurs et permettent d'identifier les serveurs de messagerie des utilisateurs ;
- intégrer dans la hiérarchie de ses étiquettes, des étiquettes créées par d'autres utilisateurs qui ont autorisé la diffusion de celles-ci vers le serveur de messagerie 2s de l'utilisateur Ua ; ces étiquettes ainsi associées à des sélections de réponses sont reçues par le serveur de messagerie 2s associé au logiciel client 3a, et enregistrées dans la base personnelle d'informations 5a du terminal 4a de l'utilisateur.

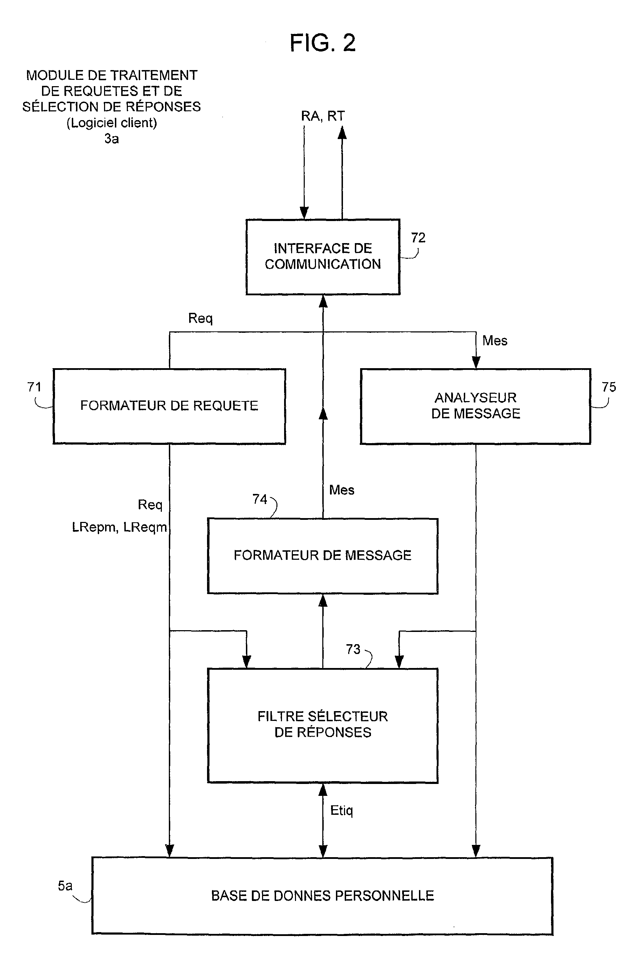

Le **logiciel client** 3a peut être décomposé en des sous - modules logiciels principaux 71 à 75 montrés à la figure 2 pour accomplir deux tâches principales:
- traitement des requêtes de recherche d'informations Req des utilisateurs et sélection de réponses au moyen d'un formateur de requête 71, d'une interface de communication 72, d'un filtre sélecteur de réponses 73, d'un formateur de message 74 et d'un analyseur de message 75 ; et
- au moyen de l'analyseur de message 75 via l'interface de communication 72, lecture périodique de messages qui sont destinés au logiciel client 3a, dans le serveur de messagerie 2s qui lui est associé, pour mettre à jour la base personnelle 5a de sélections de réponses à des requêtes ; à chaque lancement du logiciel client 3a dans le terminal 4a de l'utilisateur Ua, le logiciel client commence par lire ses messages et mettre à jour la base personnelle 5a.

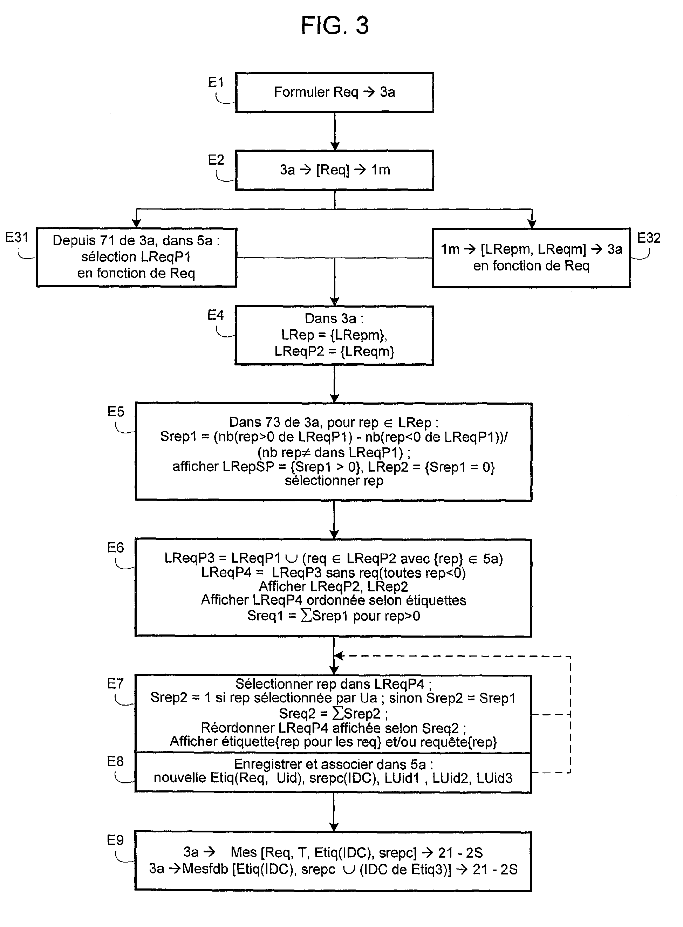

Le **filtrage de réponses** selon l'invention initié par une requête de recherche d'informations d'un utilisateur Ua à traiter dans le logiciel client 3a comporte des étapes E1 à E9, comme montré à la figure 3.

L'invention décrite ici selon les étapes E1 à E9 concerne le procédé de filtrage de réponses, un terminal 4a pour filtrer des réponses et un système de recherche d'informations. Selon une implémentation préférée, les étapes du procédé sont déterminées par des instructions d'un programme de filtrage de réponses à une requête courante de recherche d'informations incorporé dans le terminal 4a, du type comportant un microcontrôleur comme un ordinateur, et appelé "logiciel client" 3a, et le procédé selon l'invention est mis en oeuvre lorsque ce programme est chargé dans le terminal 4a dont le fonctionnement est alors commandé par l'exécution du programme.

A l'étape E1, l'utilisateur Ua commande par l'interface graphique du terminal 4a une activation du logiciel client 3a pour formuler une requête de recherche d'informations courante Req mise en forme dans le formateur de requête 71.

A l'étape E2, l'interface de communication 72 dans le logiciel client 3a transmet la requête de recherche courante Req à un ou plusieurs moteurs de recherche 1m préalablement identifiés dans la configuration du logiciel client 3a et enregistre la date T.

L'étape E3 comporte deux sous-étapes simultanées E31 et E32, la première E31 étant exécutée dans le terminal 4a et la base 5a et la deuxième E32 étant exécutée essentiellement dans le terminal 4a et au moins un moteur de recherche interrogé 1m.

E31 : le formateur de requête 71 dans le logiciel client 3a applique la requête de recherche Req à la base personnelle d'informations 5a. La base personnelle 5a exécute la requête Req pour rechercher, de manière connue, des requêtes proches de la requête courante Req, y compris des requêtes identiques à la requête courante Req. La base personnelle réunit les requêtes proches trouvées en association aux sélections de réponses sous forme d'un fichier numérique de liste de requêtes LReqP1. A titre d'exemple, la sous-étape E31 comprend une recherche de toutes les requêtes qui sont incluses dans la requête Req de l'utilisateur. Par exemple pour des mots lemmatisés, le logiciel client 3a lemmatise les mots de l'intitulé de la requête de recherche courante Req de l'utilisateur Ua et recherche toutes les requêtes proches contenant au moins un lemme ou un nombre prédéterminé de lemmes de la requête de recherche courante Req. Pour des mots lexicalisés, des ensembles de lemmes sont définis dans une structure de données appelée lemmatiseur, lesquelles données sont respectivement associées aux requêtes et exploitables par le logiciel client 3a.

E32 : le ou les moteurs de recherche 1m établissent et retournent chacun de manière connue un message incluant sous forme de fichiers numériques une liste LRepm de réponses associées à la requête courante Req, et une liste LReqm de requêtes proches de la requête courante, y compris des requêtes identiques à la requête courante Req, à l'interface de communication 72 du logiciel client LC 3a.

Le logiciel client 3a attend à l'étape E4 la fin de la recherche de requête proche lancée à l'étape E31 et la réception de la liste de réponses LRepm et de la liste de requêtes proches LReqm retournées par chaque moteur 1m dans un format de fichier numérique analysable par le filtre sélecteur de réponses 73 du logiciel client 3a. Les listes de réponses reçues LRepm sont fusionnées en un fichier numérique de liste LRep, et les listes de requêtes proches reçues LReqm sont fusionnées en un fichier numérique de liste LReqP2. Le logiciel client complète la liste LReqP1 avec d'autres requêtes qui sont extraites de la base 5a et proches des requêtes dans la liste des requêtes LReqP2.

A l'étape E5, le filtre sélecteur de réponses 73 du logiciel client 3a trie la liste LRep de réponses trouvées par les moteurs de recherche interrogés 1m.

E5a) Le filtre sélecteur 73 détermine un score Srep1 à chaque réponse rep de la liste LRep dépendant du nombre de fois que la réponse rep a été sélectionnée pour, c'est-à-dire est associée à des requêtes proches de la liste LReqP1 trouvées par et dans la base personnelle d'informations 5a. Le score Srep1 est égal par exemple à la différence entre le nombre de sélections positives de la réponse rep pour des requêtes proches trouvées dans la liste LReqP1 et le nombre de sélections négatives de la réponse rep pour les requêtes proches trouvées dans la liste LReqP1, divisée par le nombre de réponses différentes associées à toutes les requêtes proches dans la liste LReqP1.

E5b) Le filtre sélecteur 73 supprime de la liste de réponses LRep les réponses rep qui ont un score Srep1 strictement négatif ou strictement positif pour obtenir un fichier de liste LRep2 de réponses qui ont un score nul et pour lesquelles en moyenne l'utilisateur ne s'est pas prononcé afin d'afficher la liste LRep2. Les réponses qui ont un score Srep1 positif sont regroupées et classées selon l'ordre décroissant de leurs scores dans un fichier de liste de réponses à sélection positive LRepSP.

E5c) Le logiciel client 3a affiche ensuite dans le terminal 4a à l'utilisateur Ua la liste de réponses à score positif LRepSP de manière à lire et y sélectionner des réponses. En option, chaque réponse est affichée avec une liste de requêtes extraites des listes LReqP1 et LReqP2 et ayant une sélection positive de la réponse, en association avec l'identificateur Uid de l'utilisateur ayant fait cette sélection. Pour chaque requête affichée, les étiquettes déjà associées à cette requête qui sont enregistrées sont aussi accessibles par l'utilisateur Ua.

E5d) La liste de réponses à score nul LRep2 et la liste de réponses à score positif LRepSP sont ainsi affichées distinctement afin que l'utilisateur Ua sélectionne des réponses positivement ou négativement dans les listes affichées LRep2 et LRepSP, sélection qui selon une réalisation simple est poursuivie par l'enregistrement des réponses sélectionnées positivement en association à la requête courante Req à l'étape ultérieure E8. En association à la liste de réponses LRep2, le logiciel client 3a affiche la liste de requêtes LReqP2 proposée par les moteurs de recherche interrogés 1m.

Selon la réalisation illustrée, l'étape E5 est suivie par les étapes E6 et E7.

A l'étape E6, le filtre sélecteur 73 dans le logiciel client 3a réunit sensiblement les listes de requêtes proches LReqP1 et LReqP2. Plus précisément, le filtre sélecteur complète la liste de requêtes proches LReqP1 par les requêtes proches de la liste LReqP2 qui ont été fournies par les moteurs interrogés 1m et dont des sélections de réponses sont incluses dans la base 5a, pour constituer un nouveau fichier électronique de liste notée LReqP3 = LReqP1 ∪ (req de LReqP2 avec {rep} dans 5a). En association aux listes LRepSP et LReqP2, le logiciel client 3a affiche une liste de requêtes proches LReqP4 déduite de la liste LReqP3 en ayant retiré de celle-ci toutes les requêtes dont leurs sélections de réponses ne contiennent que des réponses ayant un score Srep1 négatif et donc contiennent au moins une réponse ayant un score positif ou nul. L'affichage de la liste LReqP4 sous la forme d'une liste arborescente d'étiquettes hiérarchisées regroupe les étiquettes ayant des intitulés correspondant aux requêtes proches par étiquette qui leurs sont associées et est organisé selon la hiérarchie de ces étiquettes. A côté de chaque étiquette affichée figure le nombre de réponses sélectionnées de manière positive dans des requêtes de la liste affichée LReqP4 ayant cette étiquette et, de manière optionnelle, un identificateur de l'utilisateur qui a créé cette étiquette. A côté de chaque requête affichée figure le nombre de réponses sélectionnées de manière positive avec cette requête.

Pour chaque étiquette affichée, les étiquettes ayant les intitulés de requêtes proches sont affichées dans l'ordre de leurs scores notés Sreq1. Le score Sreq1 d'une requête est égal à la somme des scores Srep1 de réponses sélectionnées de manière positive associées à la requête. Les étiquettes affichées qui ont pour ancêtre l'étiquette de cette requête sont ordonnées selon des scores d'étiquette par le filtre sélecteur 73. Le score d'une étiquette est égal à la somme des scores Sreq1 des requêtes qui ont cette étiquette.

Les étiquettes et requêtes affichées sont sélectionnables par l'utilisateur Ua à la prochaine étape E7.

L'utilisateur Ua peut manuellement modifier cet affichage de requêtes et d'étiquettes en modifiant la hiérarchie des étiquettes affichées ou en définissant une étiquette personnelle comme ancêtre direct d'étiquettes affichées créées par un autre utilisateur. Il peut également supprimer des étiquettes.

A l'étape E7, l'utilisateur Ua est invité par le filtre sélecteur 73 du logiciel client 3a à constituer une sélection courante de réponses srepc à associer à la requête courante Req, en sélectionnant de manière positive ou négative des réponses parmi celles associées aux requêtes dans la liste affichée LReqP4, c'est-à-dire des réponses relatives à des requêtes pour lesquelles leurs sélections contiennent au moins une réponse ayant un score Srep1 positif ou nul. Après chaque sélection courante de réponses srepc ou à la demande de l'utilisateur Ua, le filtre sélecteur 73 actualise les scores Srep1 des réponses affichées et les scores Sreq1 des requêtes affichées de la liste LReqP4 en des scores de réponse Srep2 et des scores de requête Sreq2. Le score Srep2 d'une réponse est égal à la valeur maximale de score de réponse "1" si la réponse vient d'être sélectionnée par l'utilisateur Ua ; sinon le score Srep2 est égal à Srep1. Le score d'une requête Sreq2 est égal à la somme des scores actualisés Srep2 des réponses sélectionnées pour la requête. A la suite de l'actualisation des scores Sreq2 des requêtes, le filtre sélecteur 73 change l'ordre d'affichage des étiquettes des requêtes proposées, par exemple selon l'ordre décroissant des scores Sreq2 des requêtes, et donc modifie le fichier de la liste LReqP4. Le filtre sélecteur 73 réordonne l'affichage des réponses dans la liste LRepSP selon les scores de réponse Srep2.

Au cours de l'étape E7, l'utilisateur Ua peut sélectionner une étiquette ou une requête proposée en association dans la liste affichée LRepSP de réponses à score initialement positif Srep1. Si l'utilisateur sélectionne une étiquette, le logiciel client 3a affiche alors la liste de réponses sélectionnées pour toutes les requêtes ayant l'étiquette sélectionnée par l'utilisateur, puis la liste de réponses pour toutes les requêtes ayant des étiquettes filles de l'étiquette sélectionnée, et ainsi de suite en descendant dans la hiérarchie des étiquettes filles. L'étiquette sélectionnée et ses étiquettes filles avec leurs requêtes sont aussi affichées de manière associée aux réponses affichées et selon les mêmes principes qu'à l'étape E6. Si l'utilisateur sélectionne une requête affichée, le logiciel client 3a affiche la requête sélectionnée et la liste des réponses sélectionnées pour cette requête, en tant que sélection courante de réponses srepc.

L'utilisateur Ua sélectionne ainsi des requêtes proches de la requête de recherche courante initiale Req.

A tout moment comme indiqué à l'étape E8 dans la figure 3, l'utilisateur Ua commande dans la base 5a l'enregistrement de sa sélection courante de réponses srepc établie et affichée à l'étape E7 en association à l'étiquette Etiq correspondant à la requête courante Req. L'étiquette Etiq appartient à la liste d'étiquettes personnelles que l'utilisateur Ua a déjà créées et enregistrées dans la base 5a, ou est sélectionnée dans la liste des étiquettes affichées à l'étape E7, ou est créée en tant que nouvelle étiquette, ou bien encore est réputée être une étiquette racine définie par défaut et créée lors de la première exécution du logiciel client 3a.

Des identificateurs Uid des utilisateurs autorisés par l'utilisateur créateur Ua de l'étiquette Etiq correspondant à la requête courante Req et inclus dans la liste de diffusion Luid2 de l'étiquette sont sélectionnés et/ou confirmés par l'utilisateur Ua pour identifier les messageries des utilisateurs autorisés dans les serveurs de messagerie 21 à 2S destinataires du message.

Si l'étiquette Etiq associée à la requête courante Req a déjà été associée à une requête ancienne avec le même intitulé, la sélection de réponses associées à la requête ancienne est supprimée et est remplacée par la sélection de réponses courante srepc.

Si ce n'est pas le cas, la requête courante Req est enregistrée dans la base personnelle 5a comme une nouvelle étiquette Etiq qui inclut la sélection courante de réponses srepc et dont l'intitulé est l'intitulé de la requête courante Req qui a pour ancêtre direct la nouvelle étiquette associée. Un identificateur unique de la nouvelle étiquette Etiq est déterminé de la même manière que pour toute étiquette, par incrémentation de 1 du numéro d'étiquette courant NumEtiq et adjonction de l'identificateur Uid de l'utilisateur Ua. L'utilisateur Ua établit une liste LUid1 relative au devoir de transmission, une liste de diffusion LUid2 et une liste LUid3 relative au besoin de retour à associer à la nouvelle étiquette Etiq par le logiciel client 3a, par exemple une liste de diffusion LUid des identificateurs d'utilisateurs autorisés à lire l'étiquette. La sélection courante de réponses srepc associées à la requête Req est enregistrée dans la base personnelle d'informations afin que le logiciel client 3a affiche à nouveau les réponses associées à la requête Req. Chaque réponse enregistrée de la sélection courante comporte aussi un identificateur unique IDC du contenu référencé dans la réponse ; l'identificateur est par exemple une adresse URL (Uniform Resource Locator) pour un document accessible par internet RT.

Les étapes E7 et E8 peuvent être répétées, comme indiqué en pointillé dans la figure 3, afin de sélectionner une ou plusieurs autres réponses parmi les réponses associées aux requêtes proches ordonnées, d'attribuer une valeur maximale au(x) score(s) Srep2 de la (des) réponse(s) sélectionnée(s), de modifier le score Sreq2 de la requête proche associée à chaque réponse sélectionnée, d'ordonner les étiquettes correspondant aux requêtes proches de la requête de recherche courante Req dans la liste LReqP4 en fonction des scores modifiés Sreq1 des requêtes proches, d'ordonner les réponses affichées en fonction des nouveaux scores Srep2, et enregistrer de nouvelles étiquettes incluant des sélections de réponses et ayant l'intitulé de la requête courante Req.

A l'étape E9, lors de l'établissement d'une étiquette Etiq avec une sélection courante de réponses srepc pour une requête de recherche courante Req, ou après une temporisation prédéterminée succédant à l'établissement de l'étiquette Etiq, ou par validation d'une demande de l'utilisateur dans le terminal 4a, ou lors de la soumission d'une nouvelle requête de recherche courante, ou lors de la désactivation du logiciel client 3a dans le terminal 4a, le formateur de message 74 dans le logiciel client 3a transmet via l'interface de communication 72 un message de sélection de réponses Mes distribué à des messageries destinataires autorisées dans des serveurs de messageries 21 à 2S. Ces messageries destinataires sont celles des utilisateurs autorisés par l'utilisateur créateur Ua de l'étiquette Etiq créée automatiquement à partir de la requête courante Req et sont identifiées par des identificateurs Uid qui sont inclus dans la liste de diffusion LUid2 associée à l'étiquette notamment lors de la création de l'étiquette. Si la liste LUid2 est vide, cette liste est composée de la liste de diffusion de son étiquette ancêtre.

Le message de sélection de réponses Mes comprend:
- l'intitulé de la requête courante Req tel qu'il a été formulé par l'utilisateur Ua ;
- la date T d'envoi de la requête courante aux moteurs de recherche 2m ;
- l'étiquette Etiq associée à cette requête par l'utilisateur. L'étiquette Etiq est décrite dans le message par son intitulé, son identificateur, sa liste LUid1 relative au devoir de transmission, sa liste LUid3 relative au besoin de retour, et la même description de tous les ancêtres de cette étiquette jusqu'à la racine dans l'ordre ascendant de filiation tant que le destinataire est dans la liste de diffusion d'un ancêtre de cette étiquette ; et
- la sélection courante des réponses srepc.

Chaque réponse est décrite dans le message Mes par :
l'identificateur du contenu IDC auquel elle réfère ;
un identificateur appelé "note" égal à "1" pour une sélection positive de la réponse et à "-1" pour une sélection négative de la réponse ;
un certificat composé de l'ensemble des étiquettes à transmettre des sélections de réponses auxquelles appartient cet identificateur de contenu IDC et qui ont été extraites de messages provenant de terminaux d'autres utilisateurs et reçues par le logiciel client 3a via le serveur de messagerie associé 2m ; une étiquette est à transmettre si la valeur de sa propriété devoir de transmission est égale à "tous" ou à une liste incluant l'identificateur Uid du destinataire du message Mes; et
l'ensemble des informations nécessaires à l'affichage de la réponse dans le logiciel client de l'utilisateur destinataire.

Pour chaque étiquette Etiq3 créée par un autre utilisateur et associée à une sélection de réponses qui inclut au moins un identificateur de contenu IDC dans la sélection de réponses courante srepc qui a été faite par l'utilisateur et qui a été extraite de la messagerie dans le serveur 2s, le formateur de message 74 envoie un message de retour Mesfdb (feedback) à chaque messagerie dont l'identificateur est lu dans la liste LUid3 relative au besoin de retour de cette étiquette Etiq. Le message Mesfdb comprend l'étiquette Etiq avec sa description, associée par l'utilisateur à la sélection courante srepc, la liste de notes et des identificateurs de contenu IDC qui sont présents dans la sélection de réponses courante srepc et qui sont associés à l'étiquette Etiq3, et l'identificateur de l'étiquette Etiq3.

A tout moment, notamment à l'étape E8 avant d'enregistrer une nouvelle étiquette ou à l'étape E9 avant de transmettre un message, l'utilisateur Ua du logiciel client 3a peut identifier des messageries autorisées à recevoir les réponses sélectionnées et donc ajouter ou enlever des identificateurs d'utilisateur dans la liste de diffusion de l'une de ses étiquettes en saisissant chaque identificateur ou en choisissant dans une liste qui lui est affichée, composée d'identificateurs d'utilisateur/messagerie déjà inclus dans l'une des listes de diffusion des étiquettes de l'utilisateur Ua ou ayant l'identificateur de l'utilisateur/messagerie Ua dans au moins l'une des listes de diffusion de leurs étiquettes. Le logiciel client 3a affiche aussi la liste des étiquettes filles de l'étiquette dont la liste de diffusion est modifiée. Chaque étiquette affichée peut être sélectionnée. Une fois la modification de la liste validée par l'utilisateur Ua, le logiciel client 3a modifie la liste de diffusion associée à l'étiquette et propage cette modification composée d'adjonction(s) et/ou de suppression(s) relatives à des identificateur(s) d'utilisateur/messagerie à l'ensemble des étiquettes filles sauf celles sélectionnées par l'utilisateur Ua.

Après avoir été activé et périodiquement tant qu'il est activé, l'analyseur de message 75 dans le logiciel client 3a demande au serveur de messagerie 2s qui lui est associé, des messages de sélection de réponses Mes qui sont transmis et déposés par d'autres terminaux 4a à 4A dans la messagerie de l'utilisateur Ua dans le serveur de messagerie 2s. Ces messages déposés sont destinés à l'utilisateur Ua qui ne les a pas encore lus. Chaque message de sélection de réponses déposé Mes inclut en outre un identificateur de l'étiquette Etiq extraite du message et un identificateur de la requête Req extraite du message, associés aux réponses sélectionnées srepc contenues dans le message.

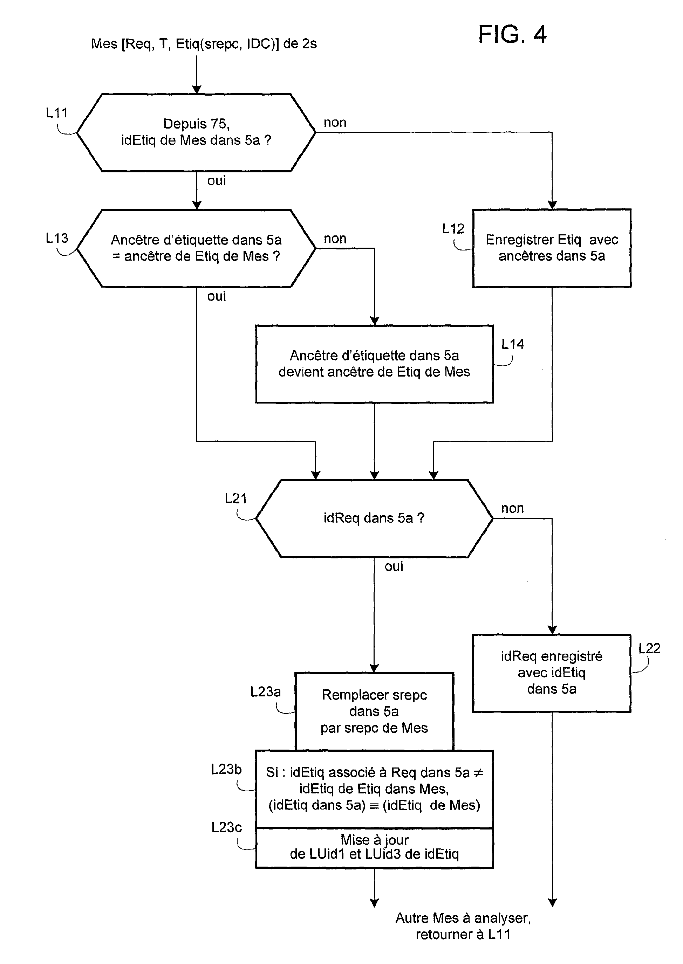

L'analyseur de message 75 **lit et analyse alors chaque message de sélection de réponses Mes** transmis par le serveur de messagerie 2s pour mettre à jour la base personnelle 5a associée au logiciel client 3a de l'utilisateur Ua selon les étapes de lecture et d'analyse et d'enregistrement suivantes L11 à L23c montrées à la figure 4, en enregistrant dans la base 5a l'étiquette Etiq, la requête Req et des réponses sélectionnées srepc extraites du message déposé lu en fonction notamment de comparaisons de l'identificateur de l'étiquette Etiq avec des identificateurs des étiquettes incluses dans la base et de l'identificateur de la requête Req avec des identificateurs des requêtes incluses dans la base.
L11) L'analyseur de message 75 applique le contenu du message Mes sous forme d'une requête à la base personnelle d'informations 5a qui recherche dans la base personnelle 5a l'identificateur idEtiq de l'étiquette Etiq associée à la requête Req et extraite du message Mes.
L12) Si l'identificateur de l'étiquette n'est pas trouvé dans la base personnelle 5a, l'étiquette est enregistrée dans la base personnelle 5a avec tous ses ancêtres décrits dans le message Mes.
L13) Si l'identificateur de l'étiquette est trouvé dans la base personnelle 5a, l'analyseur de message 75 compare l'identificateur de chaque ancêtre de l'étiquette lu dans la base personnelle 5a et l'identificateur de chaque ancêtre de l'étiquette Etiq extraite du message Mes.
L14) Pour chaque étiquette pour laquelle les identificateurs d'ancêtre comparés sont différents, l'analyseur de message 75 modifie l'identificateur de l'ancêtre de l'étiquette dans la base personnelle 5a par celui qui est extrait dans le message Mes. Si l'un des ancêtres a un identificateur qui est inconnu de la base personnelle, l'identificateur d'ancêtre inconnu est enregistré avec ses ancêtres dans la base personnelle. Le logiciel client 3a fait enregistrer aussi dans la base personnelle les droits de diffusion des étiquettes dans le message Mes.
L21) L'analyseur de message 75 recherche un identificateur de requête dans la base personnelle 5a identique à celui idReq de la requête Req dont l'intitulé est extrait du message Mes.
L22) Si l'identificateur de requête idReq n'est pas trouvé dans la base personnelle 5a, l'analyseur de message 75 le fait enregistrer dans la base personnelle 5a avec l'identificateur idEtiq de l'étiquette Etiq associée comme ancêtre direct et fait enregistrer la liste de réponses qui lui est associée.

Si l'identificateur idReq de la requête est trouvé dans la base personnelle 5a,
L23a) la sélection de réponses srepc associée à la requête Req et déjà présente dans la base personnelle d'informations 5a est supprimée et est remplacée par la sélection de réponses srepc extraite du message Mes,
L23b) l'analyseur de message 75 compare l'identificateur de l'étiquette associée à la requête dans la base personnelle 5a et celui idEtiq de l'étiquette extraite du message Mes ; s'ils sont différents l'analyseur de message remplace l'identificateur de l'étiquette dans la base personnelle 5a par celui idEtiq dans le message, et
L23c) l'analyseur de message 75 met à jour la liste LUid1 relative au devoir de transmission et la liste LUid3 relative au besoin de retour de l'étiquette Etiq dans la base personnelle 5a à partir des valeurs extraites du message Mes.

Pour que des utilisateurs **échangent des sélections de réponses** et en particulier pour que l'utilisateur Ua communique des sélections de réponses à de nouveaux utilisateurs, un utilisateur Ua utilise les fonctions d'un moteur de mise en relation 6r.

Pour cela, sous la commande de l'utilisateur Ua le logiciel client 3a ajoute dans la liste relative au besoin de transmission et/ou dans la liste de diffusion et/ou dans la liste relative au besoin de retour d'une ou de plusieurs étiquettes, l'identificateur uid assigné à au moins un moteur de mise en relation 6r intégré dans le système de recherche d'informations et saisi ou sélectionné initialement par l'utilisateur Ua lors de la création de l'étiquette.

Le moteur de mise en relation 6r reçoit ainsi directement des terminaux associés tels que le terminal 4a, des messages de sélection de réponses incluant des sélections de réponses des utilisateurs et il les enregistre. En variante, le moteur 6r reçoit des messages de sélection de réponse de mise en relation par le ou les serveurs incluant les messageries associées aux terminaux associés, tels que le serveur 2s.

Le moteur de mise en relation reçoit aussi des messages de retour Mesfdb lorsque des utilisateurs sélectionnent des réponses dont les identificateurs de contenu IDC sont aussi présents dans des messages reçus en association à des étiquettes dont l'identificateur du moteur de mise en relation 6r est inclus dans la liste LUid3 relative au besoin de retour.

Périodiquement, le moteur 6r analyse l'ensemble des messages de mise en relation Mmr pour identifier des utilisateurs qui devraient partager des sélections de réponses à propos de certains sujets. Pour chaque message de mise en relation reçu Mmr, le moteur de mise en relation 6r met à jour un Réseau de Relations entre Etiquettes dénoté RRE. Le réseau RRE est une structure de données gérée par le moteur de mise en relation 6r et contenant une représentation de relations entre étiquettes appartenant à des utilisateurs différents.

Une relation entre des étiquettes Etiq1 et Etiq2, notée par le couple (Etiq1, Etiq2), c'est-à-dire de l'utilisateur U2 créateur de la deuxième étiquette Etiq2 vers l'utilisateur U1 créateur de la première étiquette Etiq1, est créée dans le réseau RRE dès que le moteur de mise en relation 6r a reçu une sélection de réponses qui est incluse dans l'étiquette Etiq2 extraite d'un message de sélection de réponses Mes transmis par le terminal de l'utilisateur créateur de l'étiquette Etiq2 et qui inclut au moins une réponse se référant à l'étiquette Etiq1, c'est-à-dire au moins une réponse ayant un certificat contenant l'étiquette Etiq1. L'identificateur de contenu IDC et la note de la réponse ayant le certificat contenant l'étiquette Etiq1 sont introduits dans une liste d'identificateurs de contenu de réponse et de notes que le moteur de mise en relation 6r associe à la relation entre les étiquettes Etiq1 et Etiq2 du réseau RRE.

Une relation entre des étiquettes Etiq1 et Etiq2 est aussi créée dans le réseau RRE lorsque le moteur de mise en relation 6r reçoit un message de retour Mesfdb qui est transmis par le terminal de l'utilisateur créateur de l'étiquette Etiq2 et qui inclut l'étiquette Etiq1. Les identificateurs de contenu IDC et la note des réponses contenus dans ce message Mesfdb sont introduits dans une liste d'identificateurs de contenu de réponse et de notes que le moteur de mise en relation 6r associe à la relation entre les étiquettes Etiq1 et Etiq2 du réseau RRE.

Les relations entre étiquettes ne sont pas symétriques ; une relation (Etiq1, Etiq2) de l'étiquette Etiq2 vers l'étiquette Etiq1 est différente d'une relation (Etiq2, Etiq1) de l'étiquette Etiq1 vers l'étiquette Etiq2. A chaque noeud représentant une étiquette du réseau RRE, le moteur de mise en relation 6r gère aussi une liste des identificateurs de contenu IDC de réponses associées à cette étiquette. Cette liste est notée L_IDC.

Grâce au réseau de relation RRE, le moteur de mise en relation 6r détermine un ensemble d'indicateurs, dénotés IND, qualifiant chacun une étiquette par rapport aux autres étiquettes en fonction de leurs contributions à la diffusion de réponses sélectionnées pour une requête. Ces indicateurs sont par exemple déterminés sur la base de techniques générales d'analyse structurelle de réseaux sociaux, ou plus particulièrement en fonction de facteurs d'évaluation de couples d'étiquettes et/ou de facteurs d'intérêt de proposition d'étiquette divulgués dans la demande de brevet EP-A-1406186.

Des couples d'étiquettes qui ont des listes d'identificateurs de contenu de réponse L_IDC dont l'intersection n'est pas vide et qui ne sont pas encore en relation dans le réseau RRE sont sélectionnées par le moteur de mise en relation 6r pour identifier des couples d'étiquettes qui pourraient être mises en relation.

Pour chaque couple (Etiq1, Etiq2) dont les étiquettes peuvent être mises en relation, le moteur de mise en relation 6r transmet un message MR incluant une recommandation au terminal 41 d'un utilisateur U1, créateur de l'étiquette Etiq1, pour l'inviter à ajouter l'identificateur de la messagerie de l'utilisateur U2, auteur de l'étiquette Etiq2, dans la liste de diffusion de son étiquette Etiq1, et ainsi pour recommander à l'utilisateur U1 de partager des sélections de réponses à des requêtes qui sont associées à l'étiquette Etiq1 et qui pourront être appréciées par l'utilisateur U2. Cette recommandation est fonction des indicateurs IND déterminés pour les étiquettes Etiq1 et Etiq2.

Dans le terminal 41, l'analyseur de message 75 filtre les messages de recommandation MR pour les distinguer des messages de transmission de sélection de réponses Mes provenant du serveur de la messagerie associée au terminal 41. Le logiciel client 31 traitent les messages de recommandation pour afficher les recommandations à l'utilisateur U1 qui peut les suivre. Un marquage particulier dans les messages de recommandation MR transmis par les moteurs de mise en relation sert au filtrage des messages de recommandation.

## Revendications

1. Procédé pour filtrer des réponses à une requête courante de recherche d'informations (Req) transmise (E2) depuis un terminal (4a) à au moins un moteur de recherche (1m), **caractérisé en ce qu'**il comprend les étapes suivantes :
rechercher (E31, E32) des requêtes (LreqP1) proches de la requête courante (Req) dans une base personnelle d'informations (5a) associée au terminal (4a) et dans le moteur de recherche (1m),
déterminer (E5) pour chacune (rep) des réponses (LRep) associées à la requête courante trouvées par le moteur de recherche et transmises au terminal (4a) un score (Srep1) dépendant du nombre de fois que la réponse (rep) est associée à des requêtes proches (LReqP1) trouvées dans la base (5a) afin de sélectionner des réponses (LRep2, LRepSP) qui ont des scores nuls et positifs, et
enregistrer (E8) les réponses sélectionnées (srepc) en association à la requête courante (Req) dans la base (5a).

2. Procédé conforme à la revendication 1, selon lequel les requêtes (LreqP1) proches de la requête courante dans la base (5a) sont aussi des requêtes qui sont extraites de la base et proches de requêtes qui sont proches de la requête courante et fournies par le moteur de recherche (1m).

3. Procédé conforme à la revendication 1 ou 2, selon lequel le score (Srep1) d'une réponse (rep) est égal à la différence entre le nombre de sélections positives de la réponse pour des requêtes proches trouvées dans la base (5a) et le nombre de sélections négatives de la réponse pour la requête courante trouvées dans la base, divisée par le nombre de réponses différentes associées à toutes les requêtes proches trouvées dans la base.

4. Procédé conforme à l'une quelconque des revendications 1 à 3, comprenant entre les étapes de déterminer (E5) et d'enregistrer (E8), des étapes répétitives (E7) pour sélectionner au moins une réponse parmi les réponses associées aux requêtes proches, pour attribuer une valeur maximale au score (Srep2) de la réponse sélectionnée et modifier le score (Sreq2) de la requête proche associée à la réponse sélectionnée, et pour ordonner les requêtes proches (LReqP4) trouvées dans la base et le moteur de recherche et associées à aucune réponse ayant un score négatif en fonction de scores modifiés (Sreq1) des requêtes proches, le score d'une requête proche étant égal à la somme des scores (Srep1) de réponses sélectionnées de manière positive associées à la requête.

5. Procédé conforme à l'une quelconque des revendications 1 à 4, comprenant une identification (E8) de messageries (LUid, 21 à 2S) autorisées à recevoir les réponses sélectionnées (srepc), et une transmission (E9) d'un message (Mes) incluant un intitulé de la requête courante (Req) et les réponses sélectionnées (srepc) en association à la requête courante (Req) par le terminal (4a) distribué aux messageries autorisées (21 à 2S).

6. Procédé conforme à l'une quelconque des revendications 1 à 5, comprenant une lecture (L11 - L23) de messages (Mes) déposés par d'autres terminaux (4a - 4A) dans une messagerie (2s) depuis le terminal (4a), chaque message déposé incluant des réponses sélectionnées (srepc) en association à un identificateur (idReq) d'une requête (Req), et un enregistrement dans la base (5a) de la requête (Req) et des réponses (Mes) sélectionnées (srepc) extraites de chaque message déposé lu en fonction notamment de comparaisons (L21) de l'identificateur de la requête (Req) avec des identificateurs des requêtes incluses dans la base.

7. Procédé conforme à l'une quelconque des revendications 1 à 6, comprenant une transmission de messages (Mes) contenant chacun une étiquette de l'utilisateur créée à partir d'une requête (Req), des réponses sélectionnées (srepc) depuis le terminal (4a) de l'utilisateur et au moins une étiquette d'au moins un autre utilisateur qui est associée à au moins l'une de ces réponses par cet autre utilisateur et qui a été extraite d'un message de la messagerie de l'utilisateur, une mise à jour de relations entre chaque étiquette d'un utilisateur extraite desdits messages et chaque étiquette d'autres utilisateurs aussi extraite desdits messages, et une transmission de recommandations (MR) par le moteur de mise en relation (6r) aux terminaux desdits autres utilisateurs pour ajouter l'identificateur d'une messagerie associée audit terminal (4a) dans une liste de diffusion des étiquettes desdits terminaux.

8. Terminal pour filtrer des réponses à une requête courante de recherche d'informations (Req) transmise (E2) à au moins un moteur de recherche (1m), **caractérisé en ce qu'**il comprend:
un moyen (71, 72) pour rechercher des requêtes proches de la requête courante (Req) dans une base personnelle d'informations (5a) associée au terminal (4a) et dans le moteur de recherche (1m),
un moyen (73) pour déterminer pour chacune (rep) des réponses (LRep) associées à la requête courante trouvées par le moteur de recherche et transmises au terminal (4a) un score (Srep1) dépendant du nombre de fois que la réponse (rep) est associée à des requêtes proches (LReqP1) trouvées dans la base (5a) afin de sélectionner des réponses (LRep2, LRepSP) qui ont des scores nuls et positifs, et
un moyen (73) pour enregistrer les réponses sélectionnées (srepc) en association à la requête courante (Req) dans la base (5a) .

9. Système de recherche d'informations comprenant des moteurs de recherche (11 - 1M), des terminaux (4a - 4A) pour filtrer des réponses à des requêtes de recherche d'informations (Req) transmises (E2) aux moteurs de recherche, et des messageries dans des serveurs de messagerie (21 à 2S) respectivement associées aux terminaux, **caractérisé en ce que** chaque terminal (4a) comprend:
un moyen (71, 72) pour rechercher des requêtes proches d'une requête courante (Req) transmise par le terminal, dans une base personnelle d'informations (5a) associée au terminal (4a) et dans au moins un moteur de recherche (1m),
un moyen (73) pour déterminer pour chacune (rep) des réponses (LRep) associées à la requête courante trouvées par le moteur de recherche et transmises au terminal (4a) un score (Srep1) dépendant du nombre de fois que la réponse (rep) est associée à des requêtes proches (LReqP1) trouvées dans la base (5a) afin de sélectionner des réponses (LRep2, LRepSP) qui ont des scores nuls et positifs,
un moyen (73) pour enregistrer les réponses sélectionnées (srepc) en association à la requête courante (Req) dans la base (5a), et
un moyen (72) pour transmettre (E9) un message (Mes) incluant un intitulé de la requête courante (Req) et les réponses sélectionnées (srepc) en association à la requête courante (Req) par le terminal (4a) à des messageries autorisées (2s) à recevoir les réponses sélectionnées (srepc),
un moyen (75) pour lire des messages (Mes) déposés par d'autres terminaux (4a - 4A) dans la messagerie (2s) associée au terminal (4a), chaque message déposé incluant des réponses sélectionnées (srepc) en association à l'intitulé d'une requête (Req) et transmis par lesdits autres terminaux (4a - 4A), et
un moyen (75) pour enregistrer dans la base (5a) la requête (Req) et des réponses sélectionnées (srepc) extraites de chaque message déposé lu (Mes) en fonction notamment de comparaisons d'un identificateur de la requête (Req) avec des identificateurs des requêtes incluses dans la base.

10. Système conforme à la revendication 9, comprenant au moins un moteur de mise en relation (6r) vers lequel des messages (Mes) contenant chacun une étiquette de l'utilisateur créée à partir d'une requête (Req), des réponses sélectionnées (srepc) depuis le terminal (4a) de l'utilisateur et au moins une étiquette d'au moins un autre utilisateur qui est associée à au moins l'une de ces réponses par cet autre utilisateur et qui a été extraite d'un message de la messagerie de l'utilisateur, qui met à jour des relations entre chaque étiquette d'un utilisateur extraite desdits messages et chaque étiquette d'autres utilisateurs aussi extraite desdits messages, et qui transmet des recommandations (MR) aux terminaux des autres utilisateurs pour ajouter l'identificateur d'une messagerie associée audit terminal (4a) dans une liste de diffusion des étiquettes desdits terminaux.

11. Programme d'ordinateur sur un support d'informations, ledit programme comportant des instructions de programme adaptées à la mise en oeuvre du procédé pour filtrer des réponses à une requête courante de recherche d'informations (Req) selon l'une quelconque des revendications 1 à 7, lorsque ledit programme est chargé et exécuté dans le terminal (4a).
